(19)

Europäisches
Patentamt
European
Patent Office
Office européen
des brevets

(11) **EP 4 480 703 A2**

(12) **EUROPEAN PATENT APPLICATION**

(43) Date of publication:
**25.12.2024 Bulletin 2024/52**

(21) Application number: **24176875.3**

(22) Date of filing: **20.05.2024**

(51) International Patent Classification (IPC):
**B32B 37/00** *(2006.01)* **B32B 37/18** *(2006.01)*
**B32B 18/00** *(2006.01)* **C04B 35/80** *(2006.01)*

(52) Cooperative Patent Classification (CPC):
**B32B 18/00; B32B 37/003; B32B 37/18;**
**C04B 35/6269; C04B 35/80;** B29C 63/0017;
B29C 63/02; B29C 70/34; B29C 70/44; B30B 5/02;
C04B 2235/604; C04B 2235/616

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **30.05.2023 US 202318325835**

(71) Applicant: **Spirit AeroSystems, Inc.**
**Wichita, KS 67210 (US)**

(72) Inventors:
• **DOAN, Thu**
**Wichita, 67210 (US)**
• **KRUEP, Dylan Michael**
**Wichita, 67210 (US)**
• **ABBOTT, Michael**
**Wichita, 67210 (US)**

(74) Representative: **HGF**
**HGF Limited**
**1 City Walk**
**Leeds LS11 9DX (GB)**

(54) **METHOD FOR FABRICATION OF A CERAMIC MATRIX COMPOSITE PART**

(57)     A method of fabricating a ceramic matrix composite material into a part, including applying a semi-permeable membrane over a stack of composite plies pre-impregnated with ceramic matrix. The semi-permeable membrane comprises a porous plastic material and may have a thickness of approximately 0.002 to 0.008 inches. The method may include compressing the semi-permeable membrane and the stack together and heating the semi-permeable membrane and the stack to cure the stack into the composite part. The semi-permeable membrane may be a porous plastic having pores large enough to allow volatile gasses to escape therethrough during curing but equal to or smaller than solid ceramic particles or clusters of the solid ceramic particles suspended in the ceramic matrix. The composite plies may contain approximately 35 percent to 45 percent of the ceramic matrix by weight relative to an overall weight of the stack of the composite plies pre-impregnated with the ceramic matrix.

*Fig. 2*

EP 4 480 703 A2

## Description

BACKGROUND

A ceramic matrix composite material can be formed using prepreg, a fibrous material pre-impregnated with a resin. The prepreg has solid particles in suspension, so a significant amount of solvent or matrix is needed to keep those solid particles in suspension. This results in an excess amount of matrix material, which needs to be removed during processing in an autoclave. Specifically, to get the target fiber volume fraction needed for a structural part, the excess matrix needs to be removed and there needs to be a pathway for volatiles to escape during autoclave processing.

The challenge of 1) removal of excess matrix and 2) pathway for volatile escape is currently solved by using a fiberglass bleeder stack which soaks up excess matrix. For example, there may be one layer of fiberglass per two layers of prepreg over the stack of prepreg material. The fiberglass bleeder stack acts like a sponge to soak up excess matrix during autoclave processing.

This traditional process is difficult to scale up (e.g., matrix needs to travel through the thickness of the part, which means thicker parts require the matrix to travel farther and potentially get trapped). Furthermore, this traditional process is difficult when working with curved/complex structures (e.g., getting a thick fiberglass stack to conform to complex geometries is challenging). Another challenge with this traditional process is that it can be difficult to implement for closed geometries. Specifically, the thick fiberglass stack adds a significant amount of bulk/thickness so fitting that into a closed shape is challenging. As a result of these challenges, when this traditional process is used, the resultant part is not homogeneous as detected by non-dimensional inspection, which indicates differences in mechanical properties throughout the part. This inconsistency is often seen in the edges of the parts as the matrix can be removed from the edges of the parts in addition to through the thickness.

Thus, there is a need for an improved process that addresses these manufacturing challenges and part quality issues associated with using the traditional process for manufacturing ceramic composite material.

SUMMARY

In one or more embodiments of the invention, a method of fabricating a composite material into a composite part includes the steps of applying at least one semi-permeable membrane over a stack of a plurality of composite plies. The semi-permeable membrane comprises a porous plastic material and may have a thickness of approximately 0.002 to 0.008 inches. The method may further include the steps of compressing the at least one semi-permeable membrane and the stack of the one or more composite plies together and heating the at least one semi-permeable membrane and the stack of the one or more composite plies to cure the stack into the composite part.

In another embodiment, a method of fabricating a ceramic matrix composite material into a composite part includes a step of arranging a plurality of composite plies pre-impregnated with a ceramic matrix (containing solid ceramic particles in suspension) into a stack. The method may further include a step of applying semi-permeable membrane over the stack of the plurality of composite plies, compressing the semi-permeable membrane and the stack of the plurality of composite plies together, and heating the stack and the semi-permeable membrane to cure the stack into the composite part. The semi-permeable membrane may include a semi-permeable plastic sheet having a plurality of pores large enough to allow volatile gasses to escape therethrough during curing but equal to or smaller than the solid ceramic particles or clusters of the solid ceramic particles suspended in the ceramic matrix in order to retain matrix in the composite.

In yet another embodiment, a method of fabricating a ceramic matrix composite material into a composite part includes a step of arranging a plurality of composite plies pre-impregnated with ceramic matrix into a stack and applying a semi-permeable membrane over the stack. In one or more of the embodiments herein, each of the plurality of composite plies contains 35 percent to 45 percent of the ceramic matrix by weight relative to an overall weight of the stack of the one or more composite plies pre-impregnated with the ceramic matrix. The method may also include the steps of compressing the semi-permeable membrane and the stack of the plurality of composite plies together and heating the semi-permeable membrane and the stack to a temperature sufficient to cure the stack of the one or more composite plies into the composite part.

This summary is intended to introduce a selection of concepts in a simplified form that are further described in the detailed description below. This summary is not intended to identify key features or essential features of the claimed subject matter, nor is it intended to be used to limit the scope of the claimed subject matter. Other aspects and advantages of the present invention will be apparent from the following detailed description of the embodiments and the accompanying drawing figures.

BRIEF DESCRIPTION OF THE DRAWING FIGURES

Embodiments of the present invention are described in more detail below with reference to the attached drawing figures, wherein:

FIG. 1 is a fragmentary cross-sectional elevation view of a stacking order for forming composite parts, in accordance with prior art methods;
FIG. 2 is a fragmentary cross-sectional elevation view of a stacking order for forming composite parts, in accordance with embodiments of the present invention;

FIG. 3 is an enlarged fragmentary cross-sectional elevation view of a semi-permeable membrane stacked onto composite plies, in accordance with embodiments of the present invention;

FIG. 4 is a schematic plan view of a first layer of the semi-permeable membrane of FIG. 3, in accordance with embodiments of the present invention;

FIG. 5 is a schematic plan view of a second layer of the semi-permeable membrane of FIG. 3, in accordance with embodiments of the present invention;

FIG. 6 is a thermography image of a composite panel fabricated in accordance with prior art methods;

FIG. 7 is a thermography image of another composite panel fabricated in accordance with prior art methods;

FIG. 8 is a thermography image of yet another composite panel fabricated in accordance with prior art methods;

FIG. 9 is a thermography image of a composite panel fabricated in accordance with embodiments of the present invention; and

FIG. 10 is a flow chart of a method for fabricating a ceramic matrix composite part, in accordance with embodiments of the present invention.

The drawing figures do not limit the present invention to the specific embodiments disclosed and described herein. The drawings are not necessarily to scale, emphasis instead being placed upon clearly illustrating the principles of the invention.

DETAILED DESCRIPTION

The following detailed description of embodiments of the invention references the accompanying drawings. The embodiments are intended to describe aspects of the invention in sufficient detail to enable those skilled in the art to practice the invention. Other embodiments can be utilized, and changes can be made, without departing from the scope of the claims. The following detailed description is, therefore, not to be taken in a limiting sense. The scope of the present invention is defined only by the appended claims, along with the full scope of equivalents to which such claims are entitled.

In this description, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments but is not necessarily included. Thus, the present technology can include a variety of combinations and/or integrations of the embodiments described herein.

Traditionally, a ceramic matrix composite material is formed using prepreg. The term "prepreg" refers to a fibrous material or a composite ply pre-impregnated with a resin, such as a ceramic matrix. The prepreg has solid particles (e.g., ceramic particles) in suspension within the matrix, so a significant amount of solvent or matrix is needed to keep those solid particles in suspension, resulting in excess matrix material during curing of the prepreg which needs to be removed.

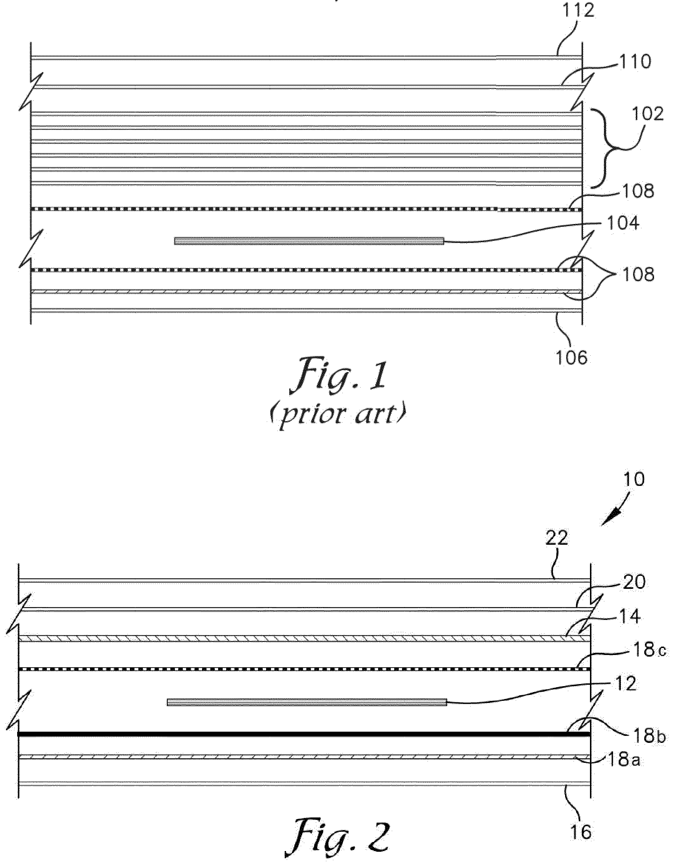

In prior art fabrication methods, as depicted in FIG. 1, removal of excess matrix and a pathway for volatiles to escape is provided by a fiberglass bleeder stack 102 stacked onto a plurality of prepreg plies 104. The fiberglass bleeder stack 102 is placed over a stack of prepreg plies 104, as depicted in FIG. 1, and the fiberglass bleeder stack 102 acts like a sponge to soak up excess matrix during autoclave processing. Generally, at least one layer of fiberglass is required per every two layers or plies of prepreg in these prior art fabrication methods. So for example, as depicted in FIG. 1, there can be 12 plies of oxide/oxide laminate and six plies or layers of the fiberglass.

As depicted in FIG. 1, the prior art method can include a rigid tool 106 onto which the plies 104 are placed, with one or more layers of release film 108 placed between the rigid tool 106 and the plies 104 stacked thereon. The fiberglass bleeder stack 102 is typically stacked onto the plies 104, and then, as further depicted in FIG. 1, a breather 110 is optionally placed onto the fiberglass bleeder stack 102. Once all of these layers are stacked onto the rigid tool 106, a vacuum bag or other such impermeable membrane 112 is placed over and sealed around these stacked components, such as being sealed to the rigid tool 106 around a periphery of these stacked components. Then the plies 104 are cured under pressure and heat.

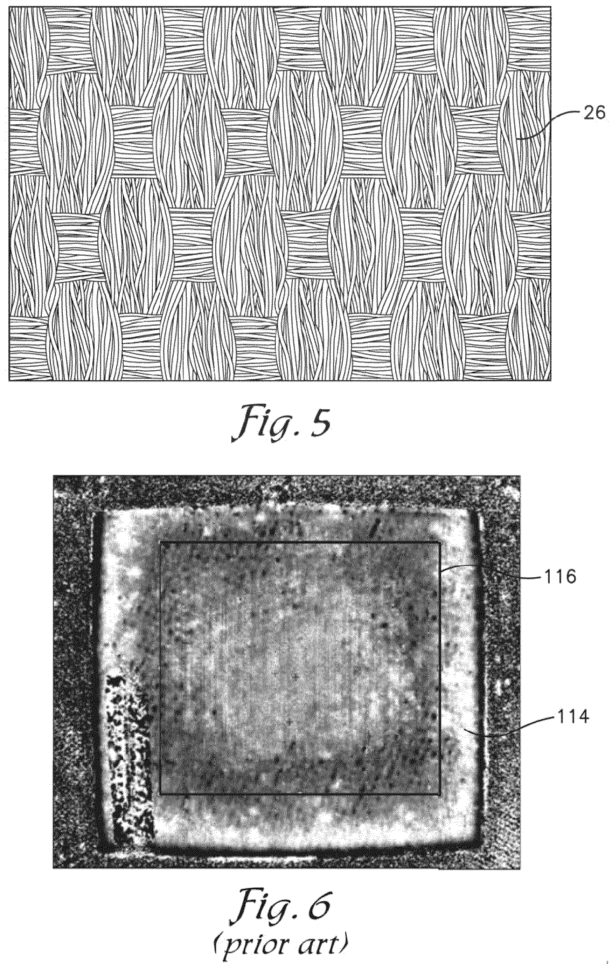

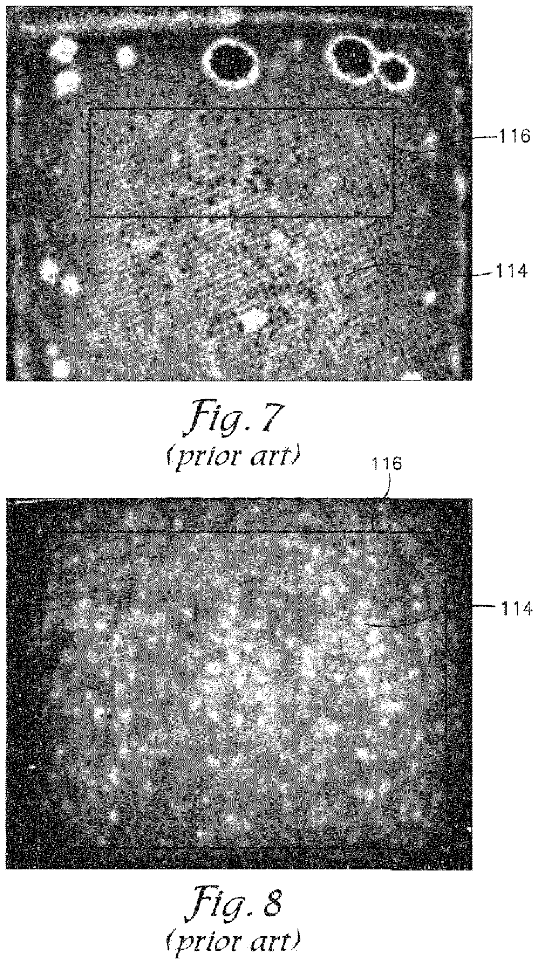

However, this traditional process is difficult to scale up and is difficult when working with curved/complex structures and closed geometries, due to the bulky thickness of the fiberglass bleeder stack. As a result of these challenges, when this traditional process is used, the resultant part 114 is not homogeneous as detected by non-dimensional inspection (see FIGS. 6-8), which indicates differences in mechanical properties throughout the part. This inconsistency is often seen in the edges of the parts as the matrix can be removed from the edges of the parts in addition to being removed through the thickness via the fiberglass bleeder stack. The boxes 116 overlaid onto the images of FIGS. 6-8 depict what limited portion of these resultant parts 114 are actually useable. Thus, in these prior art methods, quite a bit of scrap material is produced as the edges and other areas of inconsistency as shown are removed (e.g., cutting off the portions outside of the boxes 116 depicted in FIGS. 6-8).

To overcome these deficiencies in the prior art methods, one or more of the embodiments herein include a method of fabricating a ceramic matrix composite material into a composite part by applying a semi-permeable membrane over a stack of composite plies pre-impregnated with ceramic matrix, instead of the fiberglass bleeder stack 102 as described above. The semi-permeable membrane comprises a porous plastic material and may have a thickness of approximately 0.002 to 0.008 inches, in contrast to the fiberglass bleeder stack 102 that can be, for example, approximately 0.04 to 0.065 inches thick. This reduction in thickness allows for easier forming parts having complex curvatures and closed or partially closed geometries.

FIG. 2 depicts the components of a system 10 for forming a ceramic composite part in accordance with one or more embodiments herein. Specifically, the system includes a stack of prepreg or composite plies 12 pre-impregnated with a ceramic matrix and a semi-permeable membrane 14 placed thereon, optionally with various breathers and release plies placed thereon or therebetween, as described below. For example, as depicted in FIG. 2, the system 10 may include a rigid tool 16, one or more layers and/or types of release film 18a, 18b stacked thereon, followed by the stack of the composite plies 12, another sheet of the release film 18c, the semi-permeable membrane 14, a breather 20, and a vacuum bag or impermeable membrane 22. However, other embodiments may have different ordering of layers described herein, may include more or less layers than depicted, and/or the release film 18a,18b,18c and/or the breather 20 may be omitted without departing from the scope of the invention. The rigid tool 16 may be any rigid, impermeable surface sized and configured for shaping at least one surface of the composite plies 12. For example, the rigid tool 16 can be made of aluminum and can be a planar surface or a surface with simple or complex curvature. In some embodiments, the rigid tool 16 can have a complex geometry suitable for forming a composite part having closed geometries or one or more closed shapes.

The pre-impregnated stack of composite plies 12 may be oxide/oxide laminate or any prepreg having ceramic matrix pre-impregnated into the fabric thereof. The ceramic matrix may have solid ceramic particles suspended in a resin or matrix. In some embodiments, the amount of ceramic matrix is reduced compared with prior art prepreg for fabricating a ceramic composite part. Specifically, in one or more embodiments, each of the composite plies and/or the stack of composite plies may contain approximately 35 percent to 45 percent of the ceramic matrix by weight relative to an overall weight of the pre-impregnated ply or stack of the pre-impregnated plies. The ceramic content may be measured using the following equation:

$$Matrix\ Content = \frac{W_{prepreg} - W_{fabric}}{W_{prepreg}} * 100\%.$$

Furthermore, in one or more embodiments, each of the composite plies and/or the stack of composite plies may contain approximately 37 percent to 43 percent of the ceramic matrix by weight relative to an overall weight of the pre-impregnated ply or stack of the pre-impregnated plies. In one or more further embodiments, each of the composite plies and/or the stack of composite plies may contain approximately 40 percent to 42 percent of the ceramic matrix by weight relative to an overall weight of the pre-impregnated ply or stack of the pre-impregnated plies. For example, each of the composite plies and/or the stack of composite plies may contain at or about 41 percent of the ceramic matrix by weight relative to an overall weight of the pre-impregnated ply or stack of the pre-impregnated composite plies. Driving down the excess matrix material content of the prepreg (e.g., the composite plies 12) makes the semi-permeable membrane 14 more compatible with methods described herein. Note that the terms "about" and "approximately" as used for percentages herein may refer to plus or minus half a percent of the values stated (e.g., "about 41 percent" may include variations between 40.5 percent to 41.5 percent without departing from the scope of the invention as described herein).

Unlike in prior art methods, the semi-permeable membrane 14 is not made of fiberglass. As such, instead of soaking up excess matrix, it retains the matrix in the prepreg or composite plies, allowing the forming of near-net parts, while also allowing volatile gasses to escape during cure. Additionally, while one sheet of the fiberglass bleeder stack is required for every two plies of the prepreg composite plies in the prior art methods (e.g., six plies of the fiberglass for twelve plies of the composite material as in FIG. 1), the present method can use a single sheet of the semi-permeable membrane 14 in some embodiments (e.g., one semi-permeable membrane for twelve plies of the composite material as in FIG. 2). So, for example, while the thickness of the six plies of the fiberglass is approximately 0.05 inches (plus or minus 0.02 inches) prior to curing, the single sheet of the semi-permeable membrane may be approximately 0.005 inches (plus or minus 0.003 inches) prior to curing. In one or more embodiments, the semi-permeable membrane has a thickness of approximately 0.002 to 0.008 inches. Note that the term "approximately" as used for this thickness of the semi-permeable membrane may refer to plus or minus 0.0005 of the values stated. The reduction in thickness of the semi-permeable membrane in comparison to the fiberglass of the prior art methods allows for easier forming parts having complex curvatures and closed or partially closed geometries. However, note that in one or more embodiments, multiple sheets of the semi-permeable membrane described herein can be used without departing from the scope of the invention described herein.

In one or more embodiments, the semi-permeable membrane 14 may be a DAHLTEXX-SP3 membrane manufactured by Airtech International Inc. headquartered in Huntington Beach, California. However, other semi-permeable membranes 14 may be used without departing from the scope of the invention described herein, as long as they are suitable for the curing cycle required for the ceramic matrix composite part. For example, alternative semi-permeable membranes are applicable if they are autoclave compatible up to approximately 100 PSI and temperature compatible up to approximately 350-degrees F (where "approximately" in terms of temperature refers herein to the stated value within a range of plus or minus 10 degrees).

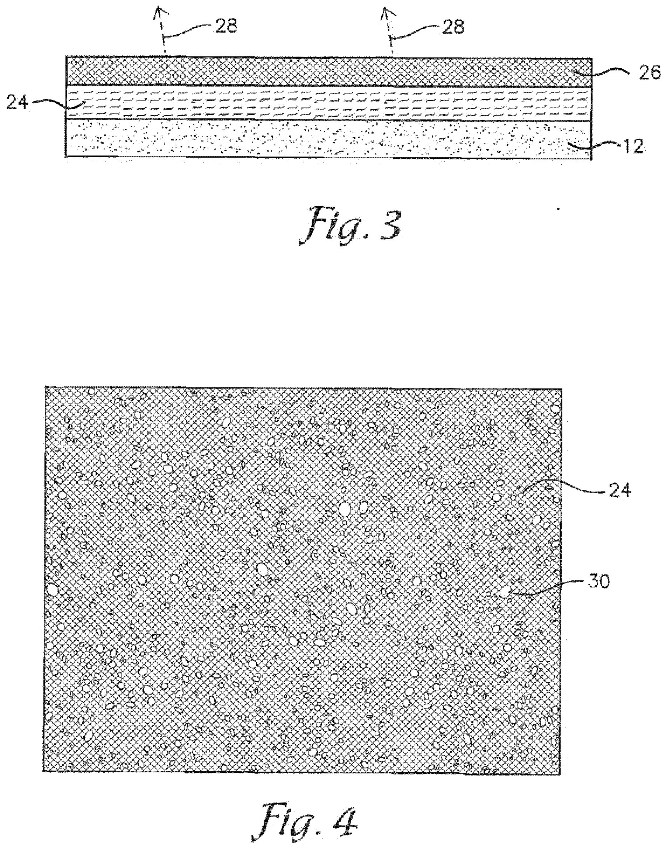

Examples of the semi-permeable membrane 14 are depicted in FIGS. 3-5. Specifically, FIG. 3 depicts an embodiment of the semi-permeable membrane 14 that includes a first layer 24 and a second layer 26. The first layer 24 faces the composite plies 12 and depicts the ceramic matrix thereof flowing against the first layer. The first layer 24 can be resting directly against the stack of composite plies 12, against the ceramic matrix thereof as depicted in FIG. 3, and/or the release film 18c may be positioned between the composite plies 12 and the first layer 24 as depicted in FIG. 2, without departing from the scope of the invention as described herein. In one or more embodiments, the second layer faces away from the composite plies 12 and FIG. 3 depicts air and volatile gas 28 escaping through the second layer 26 during curing, as described herein. However, in some alternative embodiments, the second layer 26 can be placed facing the composite plies 12 and the first layer 24 can face away from the composite plies 12. The differing properties of the first layer 24 and the second layer 26 advantageously allow the semi-permeable membrane 14 to retain all of the matrix in the composite plies 12 but to also allow gas to pass through the semi-permeable membrane 14. The semi-permeable membrane 14 has not been used in prior art techniques for such prepreg-based applications and is unique to the system described herein.

In FIG. 4, the first layer 24 is depicted with the pores 30 as described above. In one or more embodiments, the first layer 24 is made of a porous plastic, such as polyurethane. However, other porous plastics that are not made of fiberglass may be used without departing from the scope of the invention described herein. In one or more embodiments, the semi-permeable membrane 14 or the first layer 24 thereof may comprise a porous plastic material, as depicted in FIG. 4. That is, the semi-permeable membrane 14 and/or the first layer 24 thereof may include at least one plastic sheet having a plurality of pores 30 large enough to allow volatile gasses to escape therethrough during curing but equal to or smaller than solid ceramic particles or clusters of the solid ceramic particles suspended in the ceramic matrix of the composite plies 12 in order to retain the matrix in the composite part. Each or the pores 30 or a majority of the pores 30 may be sufficiently rigid to not collapse under vacuum pressure used for curing of the composite part. For example, in some embodiments, each of the pores 30 or a majority of the pores 30 are sufficiently rigid to avoid at pressures up to approximately 100 PSI, approximately 110 PSI, or approximately 120 PSI (where "approximately" in terms of pressure herein means the stated value within a range of plus or minus 10 PSI). In some embodiments, the semi-permeable membrane 14 must have a larger surface area than a surface area of the composite plies 12 or of at least one of the composite plies 12.

In FIG. 5, the second layer 26 is depicted as a woven fabric. For example, the second layer 26 may be made of nylon or polyester. The second layer 26 with its woven fabric texture may provide strength and allow ease of removal of the vacuum bag or impermeable membrane 22 after the composite plies 12 have been cured. However, other suitable fabric may be used, and/or the second layer 26 may be omitted without departing from the scope of the invention.

In one or more embodiments, the rigid tooling 16 may have a flat or substantially flat or planar rigid surface, as depicted in FIG. 2, or a non-planar surface having one or more curves, angles, shapes, or configurations. Specifically, the rigid tooling 16 may be a metal surface and/or some rigid, impermeable surface. For fabricating a substantially flat ceramic composite part or panel, the rigid tooling 16 may present the flat or planar rigid surface thereon. However, for fabricating parts with curvatures, complex curvatures, complex geometries or details/features, or even closed or semi-closed geometries, the rigid tooling 16 may include curvatures, complex curvatures, complex geometries, or even closed or semi-closed geometries, such that the composite plies 12 are formed based on the shape and configuration of the rigid tooling 16.

The release film can be any substance or material sufficient to prevent sticking of one layer to another layer, such as between the composite plies 12 and the rigid tooling 16 or between the composite plies 12 and the semi-permeable membrane 14. Examples of release film 18a, 18b, 18c may include fluoropolymer (identified in FIG. 2 as the release film 18a), a non-porous polytetrafluoroethylene ply 18b, a porous polytetrafluoroethylene ply 18c, and/or a polytetrafluoroethylene coated fiberglass sheet (not shown). Additionally or alternatively, the release film described herein may be release coatings, such as liquid coatings that solidify once applied to a surface. These release coatings may include, for example, fluoropolymers or silicone polymers (e.g., polysilazane). However, any release film that has a slip plane and/or gives a nicer surface finish to the resulting composite part can be used without departing from the scope of the invention described herein. One or more embodiments herein may even omit the release film 18a, 18b, 18c or one or more layers of the release film 18a, 18b, and/or 18c.

The breather 20 may be positioned over the semi-permeable membrane 14 and may include one, two, three, or more plies of a fabric designed to allow airflow throughout the vacuum bagging and curing process. For example, the breather 20 may include a nonwoven polyester felt breather fabric. However, other breather fabrics known in the art may be used without departing from the scope of the invention. Furthermore, some embodiments of the invention omit the breather 20 entirely or supplement or replace the breather 20 with another release film, such as the release films 18a,18b, 18c.

The impermeable membrane 22, also referred to herein as a vacuum bag is positioned over the components stacked on the rigid tooling 16 and is sealed therearound and/or sealed against the rigid tooling 16, forming a periphery around the components stacked on the rigid tooling 16. Specifically, the impermeable membrane 22 may be a flexible, impermeable material such as nylon, mylar or polyethylene, for example. The impermeable membrane 22 may, in one or more embodiments, have a vacuum port formed therethrough, or a vacuum port may be formed through the rigid tooling 16. However, other methods of introducing a pressure differential to act on the impermeable membrane 22 may be used without departing from the scope of the invention. A pressure differential may be introduced via the vacuum port or otherwise in order to urge the impermeable membrane 22 toward the rigid tooling 16. This urging of the impermeable membrane 22 toward the rigid tooling 16 thus compresses the composite plies 12 and the semi-permeable membrane 14 during curing as described below.

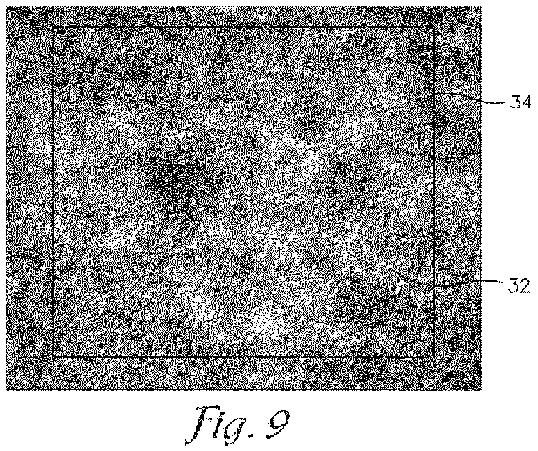

FIG. 9 provides an image of a finished ceramic composite part 32, fabricated in accordance with the system 10 and the methods described herein. As can be seen when comparing this FIG. 9 with the prior art resultant parts 114 in FIGS. 6-8, less scrap material is created using the methods described herein, and in particular the semi-permeable membrane 14 described above. Specifically, the box labeled 34 defines the parameters of the useable portion of this finished ceramic composite part 32, which requires trimming off much less material and thus is more cost-effective due to less scrap material being trimmed therefrom.

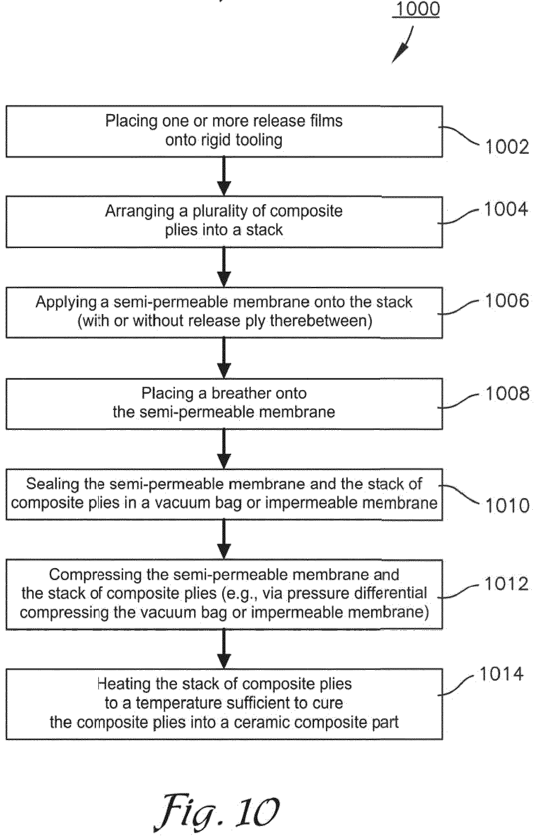

The flow chart of FIG. 10 depicts in more detail the steps of an exemplary method 1000 for fabricating ceramic matrix composite material into a composite part. In some embodiments of the invention, various steps may be omitted and/or steps may occur out of the order depicted in FIG. 10 without departing from the scope of the invention. For example, two blocks shown in succession in FIG. 10 may in fact be executed substantially concurrently, or blocks may sometimes be executed in the reverse order depending upon the functionality involved.

The method 1000 may include placing one or more release films (e.g., the release film 18a and/or 18b) onto rigid tooling 16, as depicted in block 1002, and arranging a plurality of the composite plies 12 into a stack, as depicted in block 1004. Any number of composite plies may be stacked in accordance with a desired thickness for the resulting ceramic composite part. Composite ply orientation may be identical throughout the composite plies 12 or may be varied per stacked composite ply, depending on a design and desired properties of the resulting composite part being fabricated using the methods described herein.

The method 1000 may also include applying the semi-permeable membrane 14 over the stack of composite plies 12 (with or without release ply such as the release ply 18c included between the semi-permeable membrane 14 and the composite plies 12), as depicted in block 1006. As described above, the semi-permeable membrane 14 may be placed with the first layer 24 facing toward the composite plies 12 and/or the second layer 26 facing toward the composite plies 12. In some embodiments, the method 1000 may also include placing a breather onto the semi-permeable membrane, as depicted in block 1008. However, in some embodiments this step may be omitted without departing from the scope of the invention.

Furthermore, the method 1000 may include sealing the semi-permeable membrane and the stack of composite plies in a vacuum bag or impermeable membrane, as depicted in block 1010. For example, the impermeable membrane 22 may be positioned over the components stacked on the rigid tooling 16 and sealed therearound and/or sealed against the rigid tooling 16, forming a periphery around the components stacked on the rigid tooling 16.

The method 1000 may also include compressing the semi-permeable membrane and the stack of composite plies (e.g., via pressure differential compressing the vacuum bag or impermeable membrane), as depicted in block 1012. The pressure provided via the vacuum bag or impermeable membrane 22 may be, for example, approximately 100 PSI (plus or minus 10 PSI). However, other pressure values may be used depending upon requirements for the resulting composite part. A pressure differential may be provided to the impermeable membrane 22 via a vacuum port through the impermeable membrane 22 or the rigid tooling 16, with the vacuum port attached to a vacuum that is suctioning air out from between the rigid tooling 16 and the impermeable membrane 22.

The method 1000 may further include heating the stack of composite plies to a temperature sufficient to cure the composite plies into a ceramic composite part, as depicted in block 1014. Specifically, the entire system 10 described above may be placed into an autoclave for curing. As noted above, in one or more embodiments, the cure temperature provided via the autoclave may be approximately 350-degrees F (plus or minus 10-degrees F). However, other cure temperatures may be used depending upon requirements for the resulting composite part.

Advantageously, replacing a thick fiberglass bleeder stack with a semi-permeable membrane as in the system and methods described above allows volatiles to leave and maintains matrix material from the stack of composite plies (e.g., prepreg) and retains the matrix, making the resultant parts more uniform. Furthermore, as described above, the system and methods herein can make near-net matrix content parts since the matrix is retained and makes the parts more uniform, enabling fabrication of complex closed geometries and reducing the consumption of consumable materials (e.g., the semi-permeable material having one sheet as opposed to the six layers of fiberglass material with prior art methods).

Although the invention has been described with reference to example embodiments illustrated in the attached drawing figures, it is noted that equivalents may be employed, and substitutions made herein, without departing from the scope of the invention as described and claimed herein. For example, although the present invention is described for use to form ceramic composite parts, other composite parts formed with non-ceramic particles can be formed using the methods and systems described herein without departing from the scope of the invention herein. In one or more alternative embodiments, the oxide/oxide laminate or composite plies pre-impregnated with the ceramic matrix may be replaced with high-volatile polymer composite plies, high-temperature polymer composites, or carbon-fiber composites being formed into composite parts using the system and methods described above. However, the system and methods described herein are particularly useful for forming ceramic matrix composite parts due to the particularly loaded matrix traditionally used for this type of part, causing issues with excess matrix that can be addressed using the invention disclosed above.

Having thus described one or more embodiments of the invention, what is claimed as new and desired to be protected by Letters Patent includes the following:

**Claims**

1. A method of fabricating a composite material into a composite part, the method comprising:

   applying at least one semi-permeable membrane over a stack of a plurality of composite plies, wherein the semi-permeable membrane comprises a porous plastic material and has a thickness of approximately 0.002 to 0.008 inches;
   compressing the at least one semi-permeable membrane and the stack of the one or more composite plies together; and
   heating the at least one semi-permeable membrane and the stack of the one or more composite plies to cure the stack of the one or more composite plies into the composite part.

2. The method of claim 1, wherein each of the one or more composite plies are pre-impregnated with a ceramic matrix, wherein the semi-permeable membrane includes at least one plastic sheet having a plurality of pores large enough to allow volatile gasses to escape therethrough during curing but equal to or smaller than solid ceramic particles or clusters of the solid ceramic particles suspended in the ceramic matrix.

3. The method of claim 2, wherein the semi-permeable membrane is a two-part material including a first layer and a second layer, wherein the first layer is the at least one plastic sheet positioned facing the stack and the second layer is a woven material sheet facing away from the stack, such that the first layer is between the stack and the second layer.

4. The method of claim 3, wherein the first layer is comprised of polyurethane.

5. The method of claim 3 or 4, wherein the second layer is comprised of nylon or polyester.

6. The method of any preceding claim, wherein the step of compressing the at least one semi-permeable membrane and the stack further comprises vacuum bagging the at least one semi-permeable membrane and the stack under a vacuum bag or impermeable membrane, wherein the vacuum bag or impermeable membrane, under vacuum, compresses the stack.

7. A method of fabricating a ceramic matrix composite material into a composite part, the method comprising:

   arranging a plurality of composite plies pre-impregnated with a ceramic matrix, containing solid ceramic particles in suspension, into a stack;
   applying a semi-permeable membrane over the stack of the plurality of composite plies, wherein the semi-permeable membrane comprises a semi-permeable plastic sheet having a plurality of pores large enough to allow volatile gasses to escape therethrough during curing but equal to or smaller than the solid ceramic particles or clusters of the solid ceramic particles suspended in the ceramic matrix;
   compressing the semi-permeable membrane and the stack of the plurality of composite plies together; and
   heating the semi-permeable membrane and the stack of the plurality of composite plies sufficient to cure the stack of the one or more composite plies into the composite part.

8. The method of claim 7, wherein the semi-permeable membrane is a two-part material including a first layer and a second layer, wherein the first layer is the semi-permeable plastic sheet positioned facing the stack and the second layer is a woven material sheet facing away from the stack, such that the first layer is between the stack and the second layer.

9. The method of claim 8, wherein the first layer is comprised of polyurethane.

10. The method of claim 8 or 9, wherein the second layer is comprised of nylon or polyester.

11. The method of any one of claims 7 to 10, wherein the step of compressing the semi-permeable membrane and the stack of the plurality of composite plies further comprises sealing the semi-permeable membrane and the stack under a vacuum bag or impermeable membrane and applying a pressure differential to the vacuum bag or the impermeable membrane, compressing the plurality of composite plies of the stack together.

12. The method of any preceding claim, wherein the plurality of pores of the or each semi-permeable membrane are sufficiently rigid to not collapse under vacuum pressure up to approximately 100 PSI.

13. The method of any preceding claim, wherein the stack of the one or more composite plies contains approximately 35 percent to 45 percent, or 37 percent to 43 percent, or 40 percent to 42 percent, of a ceramic matrix by weight relative to an overall weight of the stack of the one or more composite plies preimpregnated with the ceramic matrix.

14. The method of any preceding claim, wherein the or each semi-permeable membrane is autoclave compatible up to approximately 100 PSI and up to approximately 350-degrees F.

15. A method of fabricating a ceramic matrix composite material into a composite part, the method comprising:

arranging a plurality of composite plies pre-impregnated with ceramic matrix into a stack, wherein each of the plurality of composite plies contains approximately 35 percent to 45 percent of the ceramic matrix by weight relative to an overall weight of the stack of the one or more composite plies pre-impregnated with the ceramic matrix;
applying semi-permeable membrane over the stack of the plurality of composite plies;
compressing the semi-permeable membrane and the stack of the plurality of composite plies together; and
heating the semi-permeable membrane and the stack of the plurality of composite plies to a temperature sufficient to cure the stack of the one or more composite plies into the composite part.

*Fig. 1*
*(prior art)*

*Fig. 2*

Fig. 3

Fig. 4

Fig. 5

Fig. 6
(prior art)

116

114

*Fig. 7*
*(prior art)*

116

114

*Fig. 8*
*(prior art)*

34

32

*Fig. 9*

1000

Placing one or more release films
onto rigid tooling — 1002

Arranging a plurality of composite
plies into a stack — 1004

Applying a semi-permeable membrane onto the stack
(with or without release ply therebetween) — 1006

Placing a breather onto
the semi-permeable membrane — 1008

Sealing the semi-permeable membrane and the stack of
composite plies in a vacuum bag or impermeable membrane — 1010

Compressing the semi-permeable membrane and
the stack of composite plies (e.g., via pressure differential
compressing the vacuum bag or impermeable membrane) — 1012

Heating the stack of composite plies
to a temperature sufficient to cure
the composite plies into a ceramic composite part — 1014

*Fig. 10*